# EUROPEAN PATENT APPLICATION

(11) **EP 4 475 465 A1**
(43) Date of publication of application: **11.12.2024**
(21) Application number: 22936818.8
(22) Date of filing: 12.04.2022
(51) Int. Cl.: H04J 14/02, H04B 10/25, H04W 88/08

(54) **BASEBAND UNIT AND ACCESS NETWORK DEVICE**

(71) Applicant: Huawei Technologies Co., Ltd., Shenzhen, Guangdong 518129 (CN)
(72) Inventor: WU, Yangbo, Shenzhen, Guangdong 518129 (CN); YANG, Rui, Shenzhen, Guangdong 518129 (CN); QIN, Yang, Shenzhen, Guangdong 518129 (CN)
(74) Representative: Pfenning, Meinig & Partner mbB
(86) International application number: PCT/CN2022/086393
(87) International publication number: WO 2023/197164

(57) **Abstract**

Embodiments of this application disclose a baseband unit BBU and an access network device. The BBU includes M lasers, M switches SWs, M photodetectors PDs, an arrayed waveguide grating AWG, M transmit ports, and M receive ports, where M is an integer greater than or equal to 2. An i^{th} laser is coupled to an input end of an i^{th} SW, an upper output end of the i^{th} SW is coupled to an i^{th} transmit port, and the AWG is separately coupled to lower output ends of the M switches SWs, the M PDs, and the M receive ports, where i=1, 2, ..., or M. In embodiments of this application, the BBU is compatible with gray dual fiber networking and CWDM networking. When a networking mode used by the BBU needs to be changed, an optical module or a component in the BBU does not need to be replaced, so that applicability, universality, and flexibility of the BBU can be improved.

## Description

### TECHNICAL FIELD

Embodiments of this application relate to the field of optical communication technologies, and in particular, to a baseband unit and an access network device.

### BACKGROUND

With the development of a 5^{th} generation mobile communication technology (5^{th} generation mobile communication technology, 5G), a quantity of access network devices increases. There are a plurality of networking modes for transmission between a baseband unit (baseband unit, BBU) and an active antenna unit (active antenna unit, AAU). When optical fiber resources are sufficient, gray dual fiber networking may be used for the transmission between the BBU and the AAU. When optical fiber resources are insufficient, bidirectional (bidirectional, BiDi) single-fiber networking may be used for the transmission between the BBU and the AAU. When high optical fiber resource utilization is needed, coarse wavelength-division multiplexing (coarse wavelength-division multiplexing, CWDM) networking may be used for the transmission between the BBU and the AAU. It can be learned that there are a plurality of networking modes for the transmission between the BBU and the AAU, and different optical modules are needed for the BBU in different networking modes. As a result, when a networking mode used by the BBU needs to be changed, an optical module in the BBU needs to be replaced. Consequently, applicability of the BBU is poor.

### SUMMARY

Embodiments of this application disclose a baseband unit and an access network device, to improve applicability of the BBU.

According to a first aspect, this application discloses a BBU. The BBU may include M lasers, M switches (switches, SWs), M photodetectors (photon detectors, PDs), an arrayed waveguide grating (arrayed waveguide gratings, AWGs), M transmit ports, and M receive ports, where M is an integer greater than or equal to 2. An i^{th} laser is coupled to an input end of an i^{th} SW, an upper output end of the i^{th} SW is coupled to an i^{th} transmit port, and the AWG is separately coupled to lower output ends of the M switches SWs, the M PDs, and the M receive ports, where i=1, 2, ..., or M.

In this embodiment of this application, the BBU may be compatible with gray dual fiber networking and CWDM networking. When a networking mode used by the BBU is changed from the gray dual fiber networking to the CWDM networking, or from the CWDM networking to the gray dual fiber networking, a component or a chip in the BBU does not need to be replaced, so that applicability, universality, and flexibility of the BBU can be improved.

In a possible implementation, the BBU may further include M-1 multiplexers (multiplexers, MUXs), where a j^{th} MUX is separately coupled to an upper output end of a j^{th} SW, a j^{th} transmit port, and the AWG, where j=1, 2, ..., or M-1.

In this embodiment of this application, the BBU may be compatible with gray dual fiber networking, CWDM networking, and BiDi single-fiber bidirectional networking. When a networking mode used by the BBU is changed from the gray dual fiber networking to the CWDM networking, from the CWDM networking to the gray dual fiber networking, from the BiDi single-fiber bidirectional networking to the gray dual fiber networking, from the BiDi single-fiber bidirectional networking to the CWDM networking, from the CWDM networking to the BiDi single-fiber bidirectional networking, or from the BiDi single-fiber bidirectional networking to the gray dual fiber networking, a component or a chip in the BBU does not need to be replaced, so that applicability, universality, and flexibility of the BBU can be improved.

In a possible implementation, the BBU may further include M modulators (modulators, MODs), where an i^{th} MOD is separately coupled to the i^{th} laser and the input end of the i^{th} SW.

In this embodiment of this application, a bandwidth of the MOD is high, so that transmission of an optical signal at a high rate can be implemented.

In a possible implementation, when the BBU is used for gray dual fiber networking, the M transmit ports and the M receive ports each are coupled to one optical fiber. The M lasers are configured to send optical signals to corresponding optical fibers through corresponding SWs and corresponding transmit ports. The M PDs are configured to receive optical signals from corresponding optical fibers through the AWG and corresponding receive ports.

In a possible implementation, when the BBU is used for gray dual fiber networking, the M transmit ports and the M receive ports each are coupled to one optical fiber. A j^{th} laser is configured to send an optical signal to a corresponding optical fiber through a corresponding SW, a corresponding MUX, and a corresponding transmit port. An M^{th} laser is configured to send an optical signal to a corresponding optical fiber through a corresponding SW and a corresponding transmit port. The M PDs are configured to receive optical signals from corresponding optical fibers through the AWG and corresponding receive ports.

In a possible implementation, when the BBU is used for gray dual fiber networking, the M transmit ports and the M receive ports each are coupled to one optical fiber. A j^{th} laser is configured to send an optical signal to a corresponding optical fiber through a corresponding MOD, a corresponding SW, a corresponding MUX, and a corresponding transmit port. An M^{th} laser is configured to send an optical signal to a corresponding optical fiber through a corresponding MOD, a corresponding SW, and a corresponding transmit port. The M PDs are configured to receive optical signals from corresponding optical fibers through the AWG and corresponding receive ports.

In a possible implementation, when the BBU is used for CWDM networking, a first receive port is coupled to one optical fiber. The M lasers are configured to send optical signals to the optical fiber through corresponding SWs, the AWG, and the first receive port. The M PDs are configured to receive optical signals from the optical fiber through the AWG and the first receive port.

In a possible implementation, when the BBU is used for CWDM networking, a first receive port is coupled to an optical fiber. The M lasers are configured to send optical signals to the optical fiber through corresponding MODs, corresponding SWs, the AWG, and the first receive port. The M PDs are configured to receive optical signals from the optical fiber through the AWG and the first receive port.

In a possible implementation, when the BBU is used for bidirectional BiDi single-fiber bidirectional networking, the j^{th} transmit port and a first receive port each are coupled to one optical fiber. A j^{th} laser is configured to send an optical signal to a corresponding optical fiber through a corresponding SW, a corresponding MUX, and a corresponding transmit port. An M^{th} laser is configured to send an optical signal to a corresponding optical fiber through a corresponding SW, the AWG, and the first receive port. A j^{th} PD is configured to receive an optical signal from the corresponding optical fiber through the AWG, the MUX, and the j^{th} transmit port. The M^{th} PD is configured to receive an optical signal from the corresponding optical fiber through the AWG and the first receive port.

In a possible implementation, when the BBU is used for bidirectional BiDi single-fiber bidirectional networking, the j^{th} transmit port and a first receive port each are coupled to an optical fiber. A j^{th} laser is configured to send an optical signal to a corresponding optical fiber through a corresponding MOD, a corresponding SW, a corresponding MUX, and a corresponding transmit port. An M^{th} laser is configured to send an optical signal to a corresponding optical fiber through a corresponding MOD, a corresponding SW, the AWG, and the first receive port. A j^{th} PD is configured to receive an optical signal from the corresponding optical fiber through the AWG, the MUX, and the j^{th} transmit port. An M^{th} PD is configured to receive an optical signal from the corresponding optical fiber through the AWG and the first receive port.

In this embodiment of this application, the BBU is compatible with gray dual fiber networking, CWDM networking, and BiDi single-fiber bidirectional networking. When a networking mode used by the BBU is changed from the gray dual fiber networking to the CWDM networking, from the CWDM networking to the gray dual fiber networking, from the BiDi single-fiber bidirectional networking to the gray dual fiber networking, from the BiDi single-fiber bidirectional networking to the CWDM networking, from the CWDM networking to the BiDi single-fiber bidirectional networking, or from the BiDi single-fiber bidirectional networking to the gray dual fiber networking, a component or a chip in the BBU does not need to be replaced, and a networking change can be implemented only by using different optical fiber connection manners, so that applicability, universality, and flexibility of the BBU can be improved.

In a possible implementation, the laser may be a directly modulated laser (directly modulated laser, DML).

In this embodiment of this application, the DML may implement functions of a laser and a modulator, no additional modulator is needed, and a quantity of components can be reduced, thereby reducing an area of the BBU.

In a possible implementation, the laser may be a semiconductor laser.

In this embodiment of this application, an area of the semiconductor laser is small. Therefore, an area of the BBU can be reduced.

According to a second aspect, this application discloses an access network device. The access network device may include an AAU and the BBU disclosed in the first aspect.

### BRIEF DESCRIPTION OF DRAWINGS

FIG. 1 is a diagram of a structure of an access network device according to an embodiment of this application;
FIG. 2 is a diagram of gray dual fiber networking used between a BBU and an AAU according to an embodiment of this application;
FIG. 3 is a diagram of BiDi single-fiber bidirectional networking used between a BBU and an AAU according to an embodiment of this application;
FIG. 4 is a diagram of CWDM networking used between a BBU and an AAU according to an embodiment of this application;
FIG. 5 is a diagram of a structure of a BBU according to an embodiment of this application;
FIG. 6 is a diagram of a structure of another BBU according to an embodiment of this application;
FIG. 7 is a diagram of a structure of still another BBU according to an embodiment of this application;
FIG. 8 is a diagram of a structure of still another BBU according to an embodiment of this application;
FIG. 9 is a diagram of a structure of still another BBU according to an embodiment of this application;
FIG. 10 is a diagram of a BBU used for gray dual fiber networking according to an embodiment of this application;
FIG. 11 shows a route mapping table of an AWG according to an embodiment of this application;
FIG. 12 is a diagram of a BBU used for CWDM networking according to an embodiment of this application;
FIG. 13 shows another route mapping table of an AWG according to an embodiment of this application;
FIG. 14 is a diagram of a BBU used for BiDi single-fiber bidirectional networking according to an embodiment of this application;
FIG. 15 shows still another route mapping table of an AWG according to an embodiment of this application;
FIG. 16 is a diagram of a structure of still another BBU according to an embodiment of this application; and
FIG. 17 is a diagram of a structure of still another BBU according to an embodiment of this application.

### DESCRIPTION OF EMBODIMENTS

Embodiments of this application disclose a baseband unit and an access network device, to improve applicability of the BBU. Details are separately described in the following.

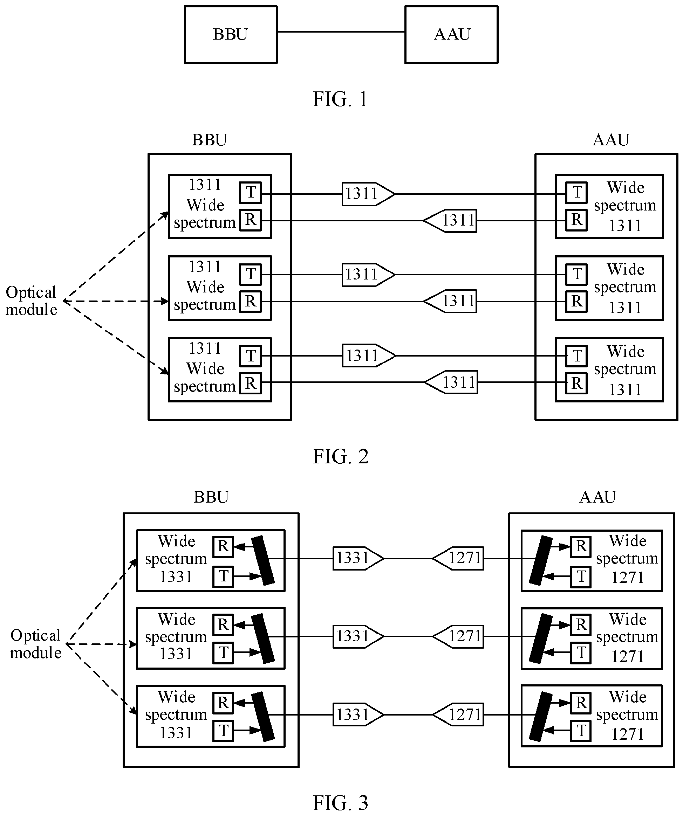

To better understand the baseband unit and the access network device that are disclosed in embodiments of this application, the following first describes the access network device used in embodiments of this application. FIG. 1 is a diagram of a structure of an access network device according to an embodiment of this application. As shown in FIG. 1, the access network device may include a BBU and an AAU. The BBU is connected to the AAU through an optical fiber. The BBU is configured to send an optical signal to the AAU through the optical fiber. The AAU is configured to: receive the optical signal from the BBU and send an optical signal to the BBU. The BBU is further configured to receive the optical signal from the AAU.

The access network device is a radio access network (radio access network, RAN) node (or device) that connects a terminal device to a wireless network, and may also be referred to as a base station.

To better understand the baseband unit and the access network device that are disclosed in embodiments of this application, the following first describes related technologies in embodiments of this application.

FIG. 2 is a diagram of gray dual fiber networking used between a BBU and an AAU according to an embodiment of this application. As shown in FIG. 2, wavelengths of optical signals generated by all optical modules in the BBU are the same. For example, the wavelengths are all 1311 nanometers (nanometers, nm). Each optical module has two external ports: a transmit (transport, T) port and a receive (receive, R) port.

FIG. 3 is a diagram of BiDi single-fiber bidirectional networking used between a BBU and an AAU according to an embodiment of this application. As shown in FIG. 3, each optical module in the BBU includes a filter. The filter may transmit an optical signal with a wavelength of 1331 nm and reflect an optical signal with a wavelength of 1271 nm. Each optical module has an external port.

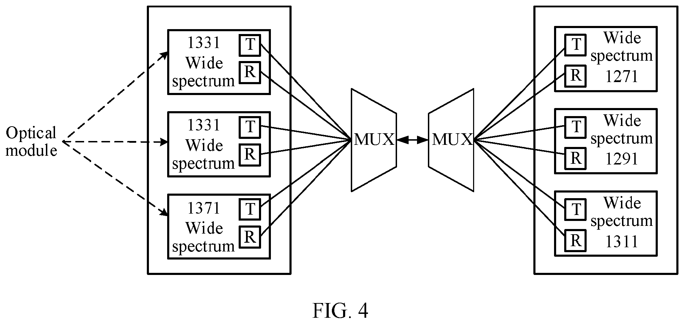

FIG. 4 is a diagram of CWDM networking used between a BBU and an AAU according to an embodiment of this application. As shown in FIG. 4, wavelengths of optical signals generated by all optical modules in the BBU are different. Each optical module has two external ports: a T port and an R port. In addition, the BBU is coupled to the AAU through two MUXs. One MUX is separately coupled to external ports of the optical modules in the BBU, and the other MUX is separately coupled to external ports of optical modules in the AAU.

That wavelengths of optical signals generated by optical modules are different indicates that lasers that generate the optical signals in the optical modules are different, and therefore, it may be determined that the optical modules are different. It can be learned that when different networking modes are used between the BBU and the AAU, different optical modules are used in the BBU. As a result, when a networking mode used by the BBU needs to be changed, an optical module in the BBU needs to be replaced. Consequently, applicability of the BBU is poor.

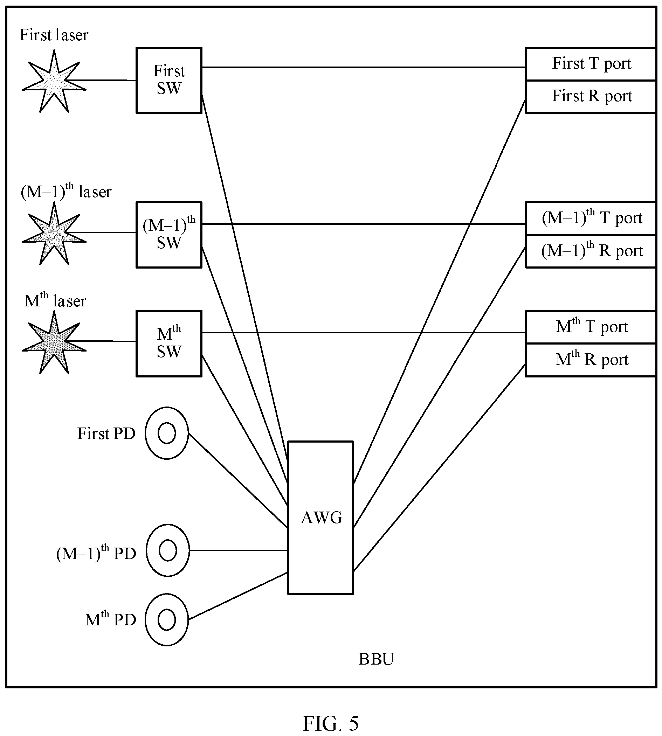

FIG. 5 is a diagram of a structure of a BBU according to an embodiment of this application. As shown in FIG. 5, the BBU may include M lasers, M SWs, M PDs, an AWG, M T ports, and M R ports, where M is an integer greater than or equal to 2.

An i^{th} laser is coupled to an input end of an i^{th} SW, an upper output end of the i^{th} SW is coupled to an i^{th} T port, and the AWG is separately coupled to lower output ends of the M SWs, the M PDs, and the M R ports, where i=1, 2, ..., or M.

It should be understood that coupling between different components in this embodiment of this application is optical coupling. The optical coupling may be optical fiber coupling or waveguide coupling. For example, when two components are connected through an optical fiber, optical coupling between the two components is optical fiber coupling. For example, when two components are connected and integrated on a same chip, optical coupling between the two components is waveguide coupling.

Optionally, when the BBU is used for gray dual fiber networking, to be specific, the gray dual fiber networking is used for transmission between the BBU and an AAU, the M T ports and the M R ports each are coupled to one optical fiber (where optical fibers coupled to the T ports and the R ports are not shown in the figure).

The M lasers are configured to send optical signals to corresponding optical fibers through corresponding SWs and corresponding T ports.

The M PDs are configured to receive optical signals from corresponding optical fibers through the AWG and corresponding R ports.

Optionally, when the BBU is used for CWDM networking, to be specific, the CWDM networking is used for transmission between the BBU and an AAU, a first R port is coupled to one optical fiber (where the optical fiber coupled to the R port is not shown in the figure).

The M lasers are configured to send optical signals to the optical fiber through corresponding SWs, the AWG, and the first R port.

The M PDs are configured to receive optical signals from the optical fiber through the AWG and the first R port.

When the BBU is used for the gray dual fiber networking, the M T ports and the M R ports each are coupled to one optical fiber, that is the BBU needs to be coupled to 2M optical fibers. In other words, the BBU may be coupled to the AAU through the 2M optical fibers.

When the BBU sends an optical signal to the AAU, the M lasers respectively send the optical signals to the corresponding optical fibers through the corresponding SWs and the corresponding T ports. Specifically, the i^{th} laser is configured to send an optical signal to the i^{th} SW. The i^{th} SW is configured to: receive the optical signal from the i^{th} laser, and send the received optical signal to the i^{th} T port through the upper output end of the i^{th} SW. The i^{th} T port is configured to: receive the optical signal from the i^{th} SW, and send the received optical signal to the AAU through a corresponding optical fiber.

When the AAU sends an optical signal to the BBU, the M PDs respectively receive the optical signals from the corresponding optical fibers through the AWG and the corresponding R ports. Specifically, an i^{th} R port is configured to: receive an optical signal from the AAU through a corresponding optical fiber, and send the received optical signal to the AWG. The AWG is configured to: receive optical signals from the M R ports, and respectively send the received M optical signals to the M PDs based on a route mapping table. An i^{th} PD is configured to: receive a corresponding optical signal from the AWG, and convert the received optical signal into an electrical signal. The route mapping table specifies a mapping relationship between different ports in the AWG, and the mapping relationship is further related to a wavelength of an optical signal. For example, when a wavelength of an optical signal received by the AWG through a port 1 is A1, the AWG may send the optical signal through a port 2 based on the route mapping table; or when a wavelength of an optical signal received by the AWG through a port 1 is A2, the AWG may send the optical signal through a port 3 based on the route mapping table. It can be learned that a port through which the AWG sends a received optical signal is determined by a port through which the AWG receives the optical signal and a wavelength of the optical signal.

When the BBU is used for the CWDM networking, the first R port is coupled to one optical fiber. The BBU only needs to be coupled to the optical fiber, in other words, the BBU may be coupled to the AAU through only one optical fiber. When the BBU sends an optical signal to the AAU, the M lasers respectively send the optical signals to the optical fiber through the corresponding SWs, the AWG, and the first R port. Specifically, the i^{th} laser is configured to send an optical signal to the i^{th} SW. The i^{th} SW is configured to: receive the optical signal from the i^{th} laser, and send the received optical signal to the AWG through a lower output end. The AWG is configured to: receive M optical signals from the M SWs, perform multiplexing processing on the M optical signals, and send a multiplexed optical signal to the first R port. The first R port is configured to: receive the multiplexed optical signal from the AWG, and send the multiplexed optical signal to the AAU through the optical fiber. Wavelengths of the M optical signals generated by the M lasers are different. The multiplexed optical signal is obtained by multiplexing the M optical signals with different wavelengths.

When the AAU sends an optical signal to the BBU, the M PDs respectively receive the optical signals from the optical fiber through the AWG and the first R port. Specifically, the first R port is configured to: receive M optical signals from the AAU through the optical fiber, and send the M optical signals to the AWG. The AWG is further configured to: receive the M optical signals from the first R port, and respectively send the M optical signals to the M PDs based on a route mapping table. An i^{th} PD is configured to: receive a corresponding optical signal from the AWG, and convert the received optical signal into an electrical signal. For detailed descriptions of the route mapping table, refer to the foregoing related content.

It can be learned that, the BBU may be compatible with the gray dual fiber networking and the CWDM networking. When a networking mode used by the BBU is changed from the gray dual fiber networking to the CWDM networking, or from the CWDM networking to the gray dual fiber networking, a component or a chip in the BBU does not need to be replaced, and a networking change can be implemented only by using different optical fiber connection manners, so that applicability, universality, and flexibility of the BBU can be improved.

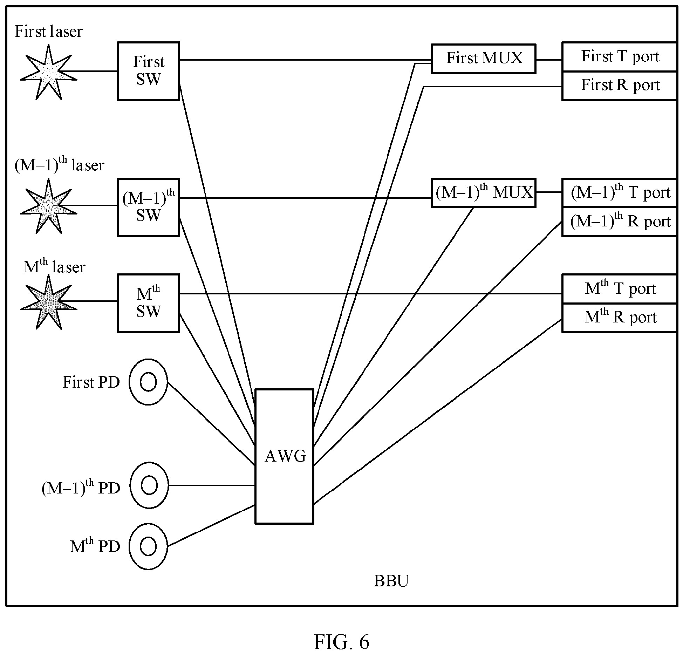

FIG. 6 is a diagram of a structure of another BBU according to an embodiment of this application. The BBU shown in FIG. 6 may be obtained based on the BBU shown in FIG. 5. As shown in FIG. 6, the BBU may further include M-1 MUXs.

A j^{th} MUX is separately coupled to an upper output end of a j^{th} SW, a j^{th} T port, and the AWG, where j=1, 2, ..., or M-1.

It should be understood that the MUX has a filtering function, and may transmit an optical signal with a preset wavelength, and reflect an optical signal other than the optical signal with a preset wavelength.

Optionally, when the BBU is used for the gray dual fiber networking, to be specific, the gray dual fiber networking is used for the transmission between the BBU and the AAU, the M T ports and the M R ports each are coupled to an optical fiber (where optical fibers coupled to the T ports and the R ports are not shown in the figure).

A j^{th} laser is configured to send an optical signal to a corresponding optical fiber through a corresponding SW, a corresponding MUX, and a corresponding T port.

An M^{th} laser is configured to send an optical signal to a corresponding optical fiber through a corresponding SW and a corresponding T port.

The M PDs are configured to receive optical signals from corresponding optical fibers through the AWG and corresponding R ports.

Optionally, when the BBU is used for BiDi single-fiber bidirectional networking, the j^{th} T port and the first R port each are coupled to one optical fiber.

A j^{th} laser is configured to send an optical signal to a corresponding optical fiber through a corresponding SW, a corresponding MUX, and a corresponding T port.

An M^{th} laser is configured to send an optical signal to a corresponding optical fiber through a corresponding SW, the AWG, and the first R port.

A j^{th} PD is configured to receive an optical signal from the corresponding optical fiber through the AWG, the MUX, and the j^{th} T port.

An M^{th} PD is configured to receive an optical signal from the corresponding optical fiber through the AWG and the first R port.

When the BBU is used for the gray dual fiber networking, the M T ports and the M R ports each are coupled to one optical fiber. When the BBU sends an optical signal to the AAU, the j^{th} laser sends the optical signal to the corresponding optical fiber through the corresponding SW, the corresponding MUX, and the corresponding T port. Specifically, the j^{th} laser is configured to send an optical signal to the j^{th} SW. The j^{th} SW is configured to: receive the optical signal from the j^{th} laser, and send the received optical signal to the j^{th} MUX through the upper output end of the j^{th} SW. The j^{th} MUX is configured to: receive the optical signal from the j^{th} SW, and send the received optical signal to the j^{th} T port. The j^{th} T port is configured to: receive the optical signal from the j^{th} MUX, and send the received optical signal to the AAU through a corresponding optical fiber. The M^{th} laser sends the optical signal to the corresponding optical fiber through the corresponding SW and the corresponding T port, to be specific, the M^{th} laser sends the optical signal to the corresponding optical fiber through an M^{th} SW and an M^{th} T port. Specifically, the M* laser is configured to send an optical signal to the M^{th} SW. The M* SW is configured to: receive the optical signal from the M^{th} laser, and send the received optical signal to the M^{th} T port through an upper output end of the M^{th} SW. The M^{th} T port is configured to: receive the optical signal from the M^{th} SW, and send the received optical signal to the AAU through a corresponding optical fiber.

When the AAU sends an optical signal to the BBU, the M PDs respectively receive the optical signals from the corresponding optical fibers through the AWG and the corresponding R ports. For detailed descriptions, refer to the corresponding descriptions in FIG. 5. Details are not described herein again.

For detailed descriptions of the BBU used for the CWDM networking, refer to the corresponding descriptions in FIG. 5. Details are not described herein again.

When the BBU is used for the BiDi single-fiber bidirectional networking, the j^{th} T port and the first R port each are coupled to one optical fiber, that is, the BBU needs to be coupled to M optical fibers. In other words, the BBU may be coupled to the AAU through the M optical fibers. When the BBU sends an optical signal to the AAU, the j^{th} laser sends the optical signal to the corresponding optical fiber through the corresponding SW, the corresponding MUX, and the corresponding T port. Specifically, the j^{th} laser is configured to send an optical signal to the j^{th} SW. The j^{th} SW is configured to: receive the optical signal from the j^{th} laser, and send the received optical signal to the j^{th} MUX through the upper output end of the j^{th} SW. The j^{th} MUX is configured to: receive the optical signal from the j^{th} SW, and send the received optical signal to the j^{th} T port. The j^{th} T port is configured to: receive the optical signal from the j^{th} MUX, and send the received optical signal to the AAU through a corresponding optical fiber. The M^{th} laser sends the optical signal to the corresponding optical fiber through the corresponding SW, the AWG, and the first R port. Specifically, the M* laser is configured to send an optical signal to an M^{th} SW. The M^{th} SW is configured to: receive the optical signal from the M^{th} laser, and send the received optical signal to the AWG through a lower output end of the M^{th} SW. The AWG is configured to: receive the optical signal from the M^{th} SW, and send the received optical signal to the first R port based on a route mapping table. An M^{th} R port is configured to: receive the optical signal from the AWG, and send the received optical signal to the AAU through a corresponding optical fiber.

When the AAU sends an optical signal to the BBU, the j^{th} PD receives the optical signal from the corresponding optical fiber through the AWG and the j^{th} T port. Specifically, the j^{th} T port is configured to: receive an optical signal from the AAU through the corresponding optical fiber, and send the received optical signal to the j^{th} MUX. The j^{th} MUX is configured to: receive the optical signal from the j^{th} T port, and send the received optical signal to the AWG. The AWG is configured to: receive the optical signal from the j^{th} MUX, and send the received optical signal to the j^{th} PD based on the route mapping table. The j^{th} PD is configured to: receive the optical signal from the AWG, and convert the received optical signal into an electrical signal. The M^{th} PD receives the optical signal from the corresponding optical fiber through the AWG and the first R port. Specifically, the first R port is configured to: receive an optical signal from the AAU through the corresponding optical fiber, and send the received optical signal to the AWG. The AWG is further configured to: receive the optical signal from the first R port, and send the received optical signal to the M^{th} PD based on the route mapping table. The M^{th} PD is configured to: receive the optical signal from the AWG, and convert the received optical signal into an M^{th} electrical signal.

When the BBU includes the M lasers and the M PDs, 4M-1 ports are disposed on the AWG, and the M lasers and the M PDs are respectively coupled to 2M ports of the 4M-1 ports of the AWG, in other words, the M lasers and the M PDs each are coupled to one port on the AWG. The M-1 MUXs and the M R ports are respectively coupled to remaining 2M-1 ports of the 4M-1 ports of the AWG.

It can be learned that the BBU may be compatible with the gray dual fiber networking, the CWDM networking, and the BiDi single-fiber bidirectional networking. When a networking mode used by the BBU is changed from the gray dual fiber networking to the CWDM networking, from the CWDM networking to the gray dual fiber networking, from the BiDi single-fiber bidirectional networking to the gray dual fiber networking, from the BiDi single-fiber bidirectional networking to the CWDM networking, from the CWDM networking to the BiDi single-fiber bidirectional networking, or from the BiDi single-fiber bidirectional networking to the gray dual fiber networking, a component or a chip in the BBU does not need to be replaced, and a networking change can be implemented only by using different optical fiber connection manners, so that applicability, universality, and flexibility of the BBU can be improved.

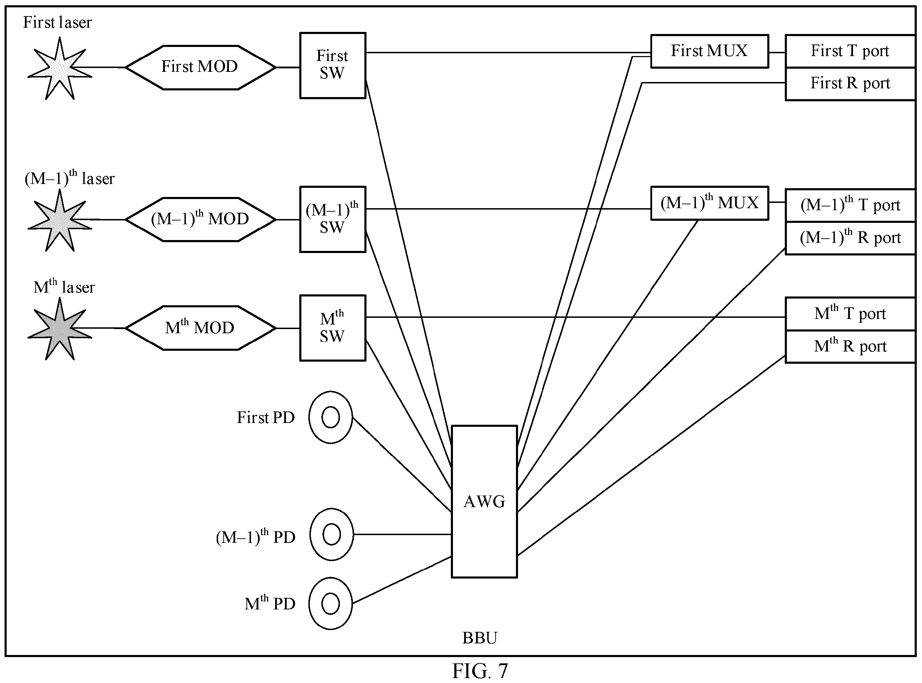

FIG. 7 is a diagram of a structure of still another BBU according to an embodiment of this application. The BBU shown in FIG. 7 may be obtained based on the BBU shown in FIG. 6. As shown in FIG. 7, the BBU may further include M MODs.

An i^{th} MOD is separately coupled to the i^{th} laser and the input end of the i^{th} SW.

Optionally, when the BBU is used for the gray dual fiber networking, to be specific, the gray dual fiber networking is used for the transmission between the BBU and the AAU, the M T ports and the M R ports each are coupled to an optical fiber (where optical fibers coupled to the T ports and the R ports are not shown in the figure).

The j^{th} laser is configured to send an optical signal to a corresponding optical fiber through a corresponding MOD, a corresponding SW, a corresponding MUX, and a corresponding T port.

The M^{th} laser is configured to send an optical signal to a corresponding optical fiber through a corresponding MOD, a corresponding SW, and a corresponding T port.

The M PDs are configured to receive optical signals from corresponding optical fibers through the AWG and corresponding R ports.

Optionally, when the BBU is used for the CWDM networking, to be specific, the CWDM networking is used for the transmission between the BBU and the AAU, the first R port is coupled to one optical fiber (where the optical fiber coupled to the R port is not shown in the figure).

The M lasers are configured to send optical signals to the optical fiber through corresponding MODs, corresponding SWs, the AWG, and the first R port.

The M PDs are configured to receive optical signals from the optical fiber through the AWG and the first R port.

Optionally, when the BBU is used for the BiDi single-fiber bidirectional networking, the j^{th} T port and the first R port each are coupled to an optical fiber (where optical fibers coupled to the T port and the R port are not shown in the figure).

The j^{th} laser is configured to send an optical signal to a corresponding optical fiber through a corresponding MOD, a corresponding SW, a corresponding MUX, and a corresponding T port.

The M^{th} laser is configured to send an optical signal to a corresponding optical fiber through a corresponding MOD, a corresponding SW, the AWG, and the first R port.

The j^{th} PD is configured to receive an optical signal from the corresponding optical fiber through the AWG, the MUX, and the j^{th} T port.

The M^{th} PD is configured to receive an optical signal from the corresponding optical fiber through the AWG and the first R port.

The laser may first send the optical signal to the MOD. The MOD modulates the optical signal, and then sends a modulated optical signal to the MUX, the T port, or the AWG. A subsequent optical signal processing manner is the same as that described above. For detailed descriptions, refer to the foregoing related descriptions. Details are not described herein again. After the MOD is added to the BBU, because a bandwidth of the MOD is high, transmission of an optical signal at a high rate can be implemented.

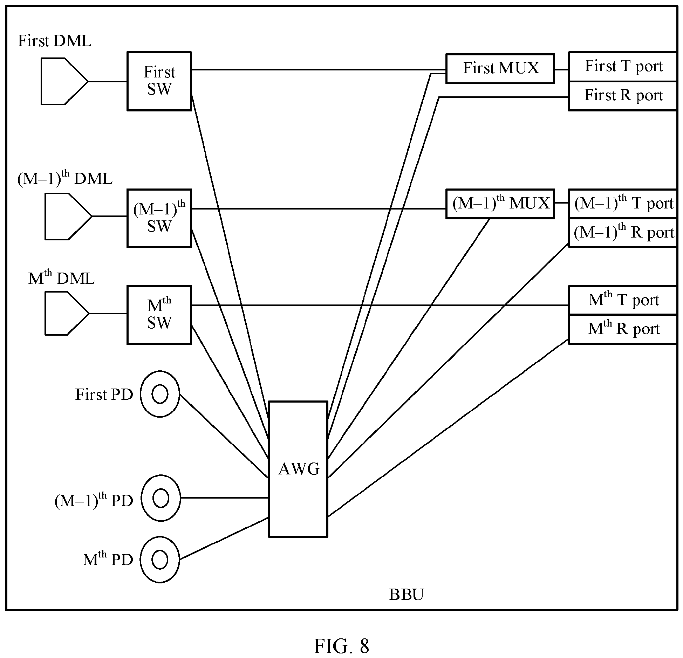

FIG. 8 is a diagram of a structure of still another BBU according to an embodiment of this application. The BBU shown in FIG. 8 may be obtained based on the BBU shown in FIG. 5 to FIG. 7. As shown in FIG. 8, the i^{th} laser in FIG. 5 or FIG. 6 may be replaced with an i^{th} directly modulated laser (directly modulated laser, DML). Because the DML has functions of a laser and a MOD, it may also be understood as that the i^{th} laser and the i^{th} MOD in FIG. 7 are replaced with the i^{th} DML in FIG. 8. The i^{th} DML is configured to send a modulated i^{th} optical signal to the i^{th} SW. A subsequent optical signal processing manner is the same as that in the foregoing embodiments. For detailed descriptions, refer to the foregoing related descriptions. Details are not described herein again. After the DML is added to the BBU, because the DML can implement the functions of the laser and the modulator, no additional modulator is needed, and a quantity of components in the BBU can be reduced, thereby reducing an area of the BBU.

The laser in the foregoing embodiments may be a semiconductor laser, a solid-state laser, a gas laser, or a dye laser. For example, the laser may be a laser diode (laser diode, LD). The foregoing examples are merely examples for describing the laser, and do not constitute a limitation on the laser.

The MOD in the foregoing embodiments may be a Mach-Zehnder modulator (Mach-Zehnder modulator, MZM), an electro-absorption modulator, a micro-ring modulator, or another modulator. This is not limited herein.

The SW in the foregoing embodiments may be a Mach-Zehnder interferometer (Mach-Zehnder interferometer, MZI) switch, a micro-electro-mechanical system (micro-electro-mechanical system, MEMS) switch, a liquid crystal on silicon (liquid crystal on silicon, LCOS) switch, or another switch. This is not limited herein.

The MUX in the foregoing embodiments may be a thin film filter (thin film filter, TFF), an MZI cascade, an AWG, or another MUX. This is not limited herein.

The following further describes the foregoing BBU by using an example. M is assumed to be 3.

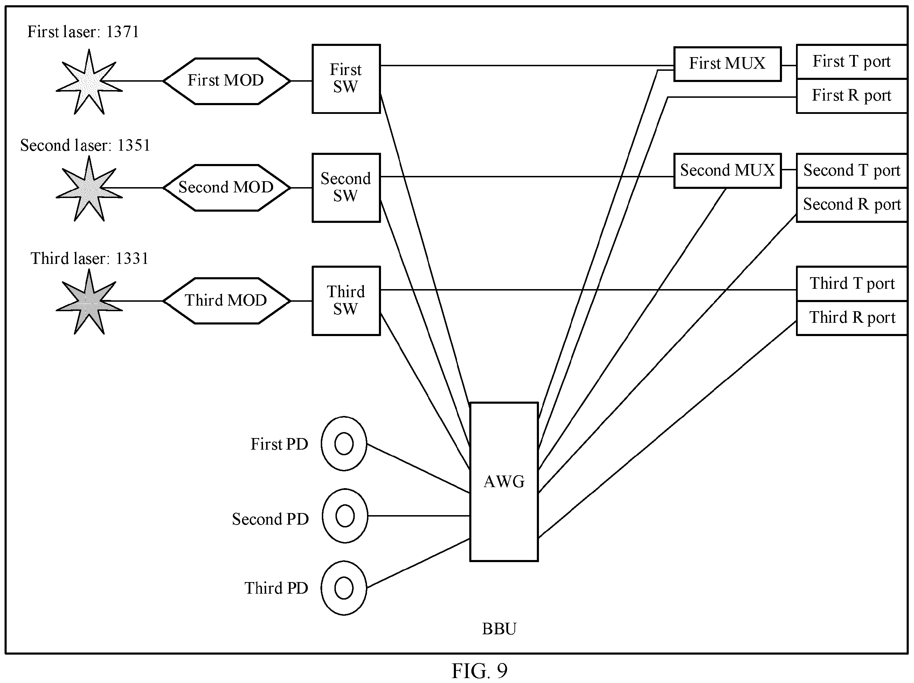

FIG. 9 is a diagram of a structure of still another BBU according to an embodiment of this application. As shown in FIG. 9, the BBU may include three lasers, three MODs, three PDs, one AWG, two MUXs, three transmit ports, and three receive ports. A wavelength of an optical signal generated by a first laser is 1371 nm, a wavelength of an optical signal generated by a second laser is 1351 nm, and a wavelength of an optical signal generated by a third laser is 1331 nm. Each of the lasers with wavelengths of 1331 nm, 1351 nm, and 1371 nm is coupled to a corresponding SW after being modulated by one MOD. Upper outputs ports of a first SW and a second SW are respectively coupled to corresponding T ports through corresponding MUXs. An upper output of a third SW is coupled to a corresponding T port. The AWG is separately coupled to lower outputs of the three SWs, an R port of a 1371 nm channel, an R port of a 1351 nm channel, an R port of a 1331 nm channel, the two MUXs, and the three PDs.

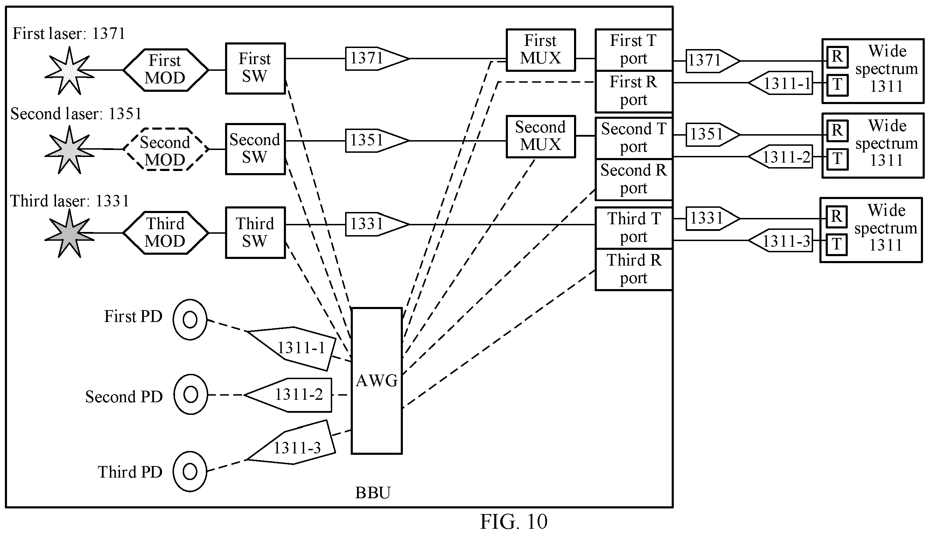

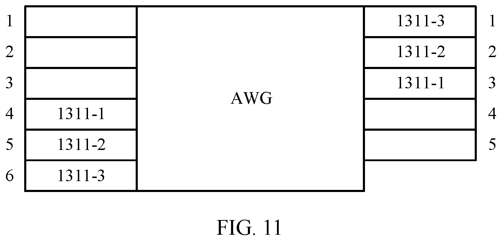

FIG. 10 is a diagram of a BBU used for gray dual fiber networking according to an embodiment of this application. As shown in FIG. 10, optical signals generated by a first laser and a second laser are output by using upper output ports of corresponding SWs after being modulated by corresponding MODs, and then are sent to an AAU through corresponding T ports after being coupled through corresponding MUXs. An optical signal generated by a third laser is output by using an upper output port of a corresponding SW after being modulated by a corresponding MOD, and is sent to the AAU through a corresponding T port. The AAU receives a corresponding optical signal by using a wide spectrum of a corresponding optical module. The AAU respectively sends 1311 nm optical signals, to be specific, 1311-1, 1311-2, and 1311-3, to a first R port, a second R port, and a third R port in the BBU. After receiving the optical signals from the AAU, the first R port, the second R port, and the third R port send the optical signals to an AWG. FIG. 11 shows a route mapping table of an AWG according to an embodiment of this application. The AWG may respectively send three optical signals to three PDs based on the route mapping table in FIG. 11. For example, when the AWG receives an optical signal with a wavelength of 1311 nm through a right port 1, the AWG may send the optical signal through a left port 6. As shown in FIG. 10 and FIG. 11, optical signals with a same wavelength are input into different ports of the AWG, and output to different ports of the AWG. For example, when the AWG receives the optical signal with a wavelength of 1311 nm through the right port 1, the AWG may send the optical signal through the left port 6. When the AWG receives the optical signal with a wavelength of 1311 nm through a right port 2, the AWG may send the optical signal through a left port 5. When the AWG receives the optical signal with a wavelength of 1311 nm through a right port 3, the AWG may send the optical signal through a left port 4.

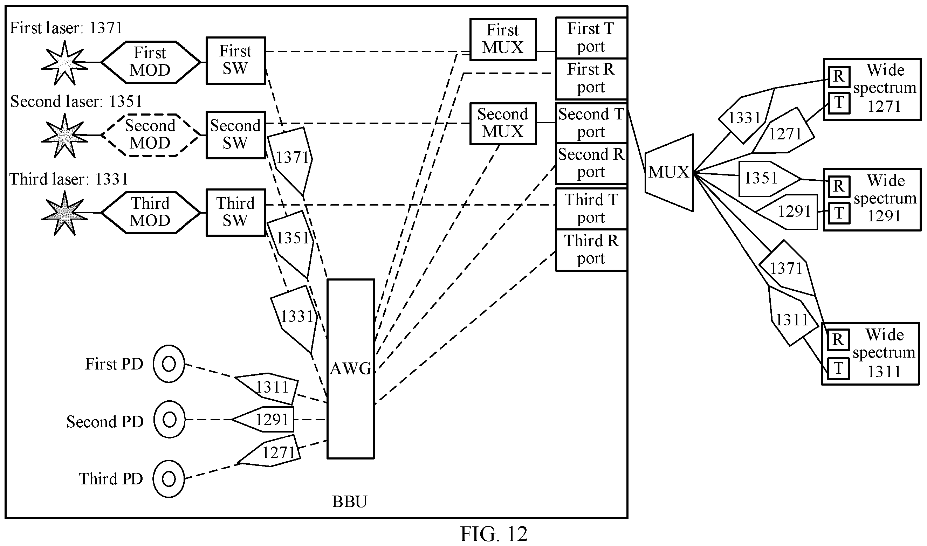

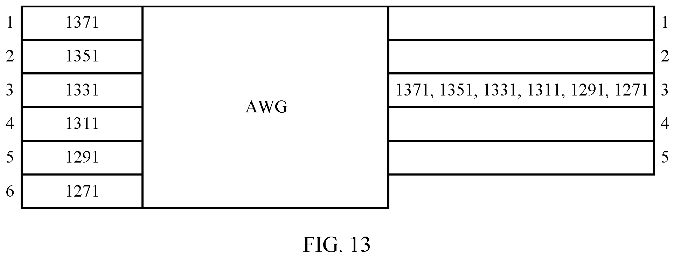

FIG. 12 is a diagram of a BBU used for CWDM networking according to an embodiment of this application. As shown in FIG. 12, optical signals generated by a first laser, a second laser, and a third laser are output by using lower output ports of corresponding SWs after being modulated by corresponding MODs, and are sent to an AAU through an AWG and a first R port. The AAU respectively sends the three optical signals to three optical modules through a MUX. 1271 nm, 1291 nm, and 1331 nm optical signals generated by the three optical modules in the AAU are coupled to an optical fiber through the MUX, and are sent to the first R port through the optical fiber. After receiving the optical signal from the AAU, the first R port sends the optical signal to the AWG. FIG. 13 shows another route mapping table of an AWG according to an embodiment of this application. The AWG may respectively send three optical signals to three PDs based on the route mapping table in FIG. 13. For example, when the AWG receives an optical signal with a wavelength of 1311 nm through a right port 3, the AWG may send the optical signal through a left port 4.

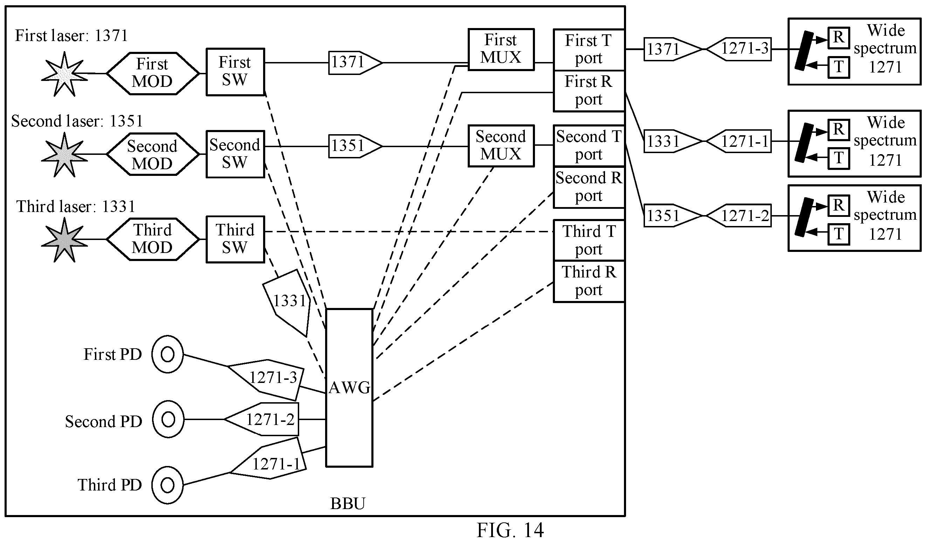

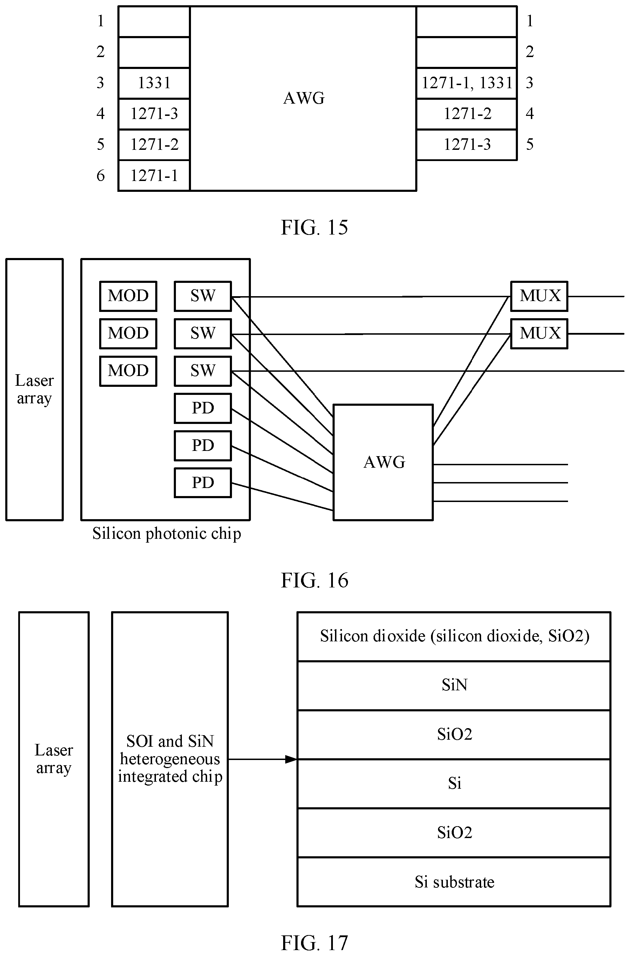

FIG. 14 is a diagram of a BBU used for BiDi single-fiber bidirectional networking according to an embodiment of this application. As shown in FIG. 14, optical signals generated by a first laser and a second laser are output by using upper output ports of corresponding SWs after being modulated by corresponding MODs, and then are sent to an AAU through corresponding T ports after being coupled through corresponding MUXs. An optical signal generated by a third laser is output through a lower output port of a corresponding SW after being modulated by a corresponding MOD, and is sent to a corresponding optical module in the AAU through an AWG and a first R port. The optical signals are received by using wide spectrums after the optical signals are processed by low-pass filters in optical modules included in the AAU. The AAU respectively sends 1271 nm optical signals, to be specific, 1271-1, 1271-2, and 1271-3, to a first T port, the first R port, and a second T port in the BBU. After receiving the optical signal from the AAU, the first R port sends the optical signal to the AWG. After receiving the optical signals from the AAU, the first T port and the second T port respectively send the optical signals to the AWG through a first MUX and a second MUX. FIG. 15 shows still another route mapping table of an AWG according to an embodiment of this application. The AWG may respectively send three optical signals to three PDs based on the route mapping table in FIG. 15. For example, when the AWG receives an optical signal with a wavelength of 1311 nm through a right port 3, the AWG may send the optical signal through a left port 4. For detailed descriptions of 1271-1, 1271-2, and 1271-3, refer to the related descriptions of 1311-1, 1311-2, and 1311-3. Details are not described herein again.

FIG. 16 is a diagram of a structure of still another BBU according to an embodiment of this application. As shown in FIG. 16, lasers form a laser array and are integrated on a separate chip. MODs, SWs, and PDs are integrated on a silicon photonic chip. An AWG and MUXs are separate components. Optical coupling between the laser and the MOD is optical fiber coupling. Optical coupling between the MOD and the SW is waveguide coupling. Optical coupling between the AWG and the SW, between the AWG and the PD, and between the AWG and the MUX is optical fiber coupling.

FIG. 17 is a diagram of a structure of still another BBU according to an embodiment of this application. As shown in FIG. 17, lasers form a laser array and are integrated on a separate chip. MODs, SWs, PDs, an AWG, and MUXs are all integrated on a chip, and the chip may be a silicon on insulator (silicon on insulator, SOI) and silicon nitride (silicon nitride, SiN) heterogeneous integrated chip. The laser array may couple an optical signal into the SOI and SiN heterogeneous integrated chip by using an end-face coupler. The MODs, the SWs, and the PDs may be integrated at a silicon (silicon, Si) layer in the SOI and SiN heterogeneous integrated chip. The AWG, the MUXs, and the end-face coupler may be integrated at a SiN layer in the SOI and SiN heterogeneous integrated chip. Optical coupling between the laser and the MOD is optical fiber coupling. Optical coupling between the MOD and the SW is waveguide coupling. Optical coupling between the AWG and the SW, between the AWG and the PD, and between the AWG and the MUX is waveguide coupling.

It should be understood that FIG. 16 and FIG. 17 are examples for describing the structure of the BBU, and do not constitute a limitation on the structure of the BBU.

The BBU may be used in an access network device, and the access network device may further include an AAU. For a structure of the BBU in the access network device, refer to FIG. 5 to FIG. 10, FIG. 12, and FIG. 14. A structure of the AAU is not limited in this application. In some implementations, the structure of the AAU may be shown in FIG. 10, FIG. 12, or FIG. 14.

Objectives, technical solutions, and beneficial effects of the present invention are further described in detail in the foregoing specific implementations. It should be understood that the foregoing descriptions are merely specific implementations of the present invention, and are not intended to limit the protection scope of the present invention. Any modification, equivalent replacement, improvement, or the like made based on the technical solutions of the present invention shall fall within the protection scope of the present invention.

## Claims

1. A baseband unit BBU, comprising M lasers, M switches SWs, M photodetectors PDs, an arrayed waveguide grating AWG, M transmit ports, and M receive ports, wherein M is an integer greater than or equal to 2; and
an i^{th} laser is coupled to an input end of an i^{th} SW, an upper output end of the i^{th} SW is coupled to an i^{th} transmit port, and the AWG is separately coupled to lower output ends of the M switches SWs, the M PDs, and the M receive ports, wherein i=1, 2, ..., or M.

2. The BBU according to claim 1, wherein the BBU further comprises M-1 multiplexers MUXs, wherein
a j^{th} MUX is separately coupled to an upper output end of a j^{th} SW, a j^{th} transmit port, and the AWG, wherein j=1, 2, ..., or M-1.

3. The BBU according to claim 1 or 2, wherein the BBU further comprises M modulators MODs, wherein
an i^{th} MOD is separately coupled to the i^{th} laser and the input end of the i^{th} SW.

4. The BBU according to claim 1, wherein the M transmit ports and the M receive ports each are coupled to an optical fiber;
the M lasers are configured to send optical signals to corresponding optical fibers through corresponding SWs and corresponding transmit ports; and
the M PDs are configured to receive optical signals from corresponding optical fibers through the AWG and corresponding receive ports.

5. The BBU according to claim 2, wherein the M transmit ports and the M receive ports each are coupled to an optical fiber;
a j^{th} laser is configured to send an optical signal to a corresponding optical fiber through a corresponding SW, a corresponding MUX, and a corresponding transmit port;
an M^{th} laser is configured to send an optical signal to a corresponding optical fiber through a corresponding SW and a corresponding transmit port; and
the M PDs are configured to receive optical signals from corresponding optical fibers through the AWG and corresponding receive ports.

6. The BBU according to claim 3, wherein the M transmit ports and the M receive ports each are coupled to an optical fiber;
a j^{th} laser is configured to send an optical signal to a corresponding optical fiber through a corresponding MOD, a corresponding SW, a corresponding MUX, and a corresponding transmit port;
an M* laser is configured to send an optical signal to a corresponding optical fiber through a corresponding MOD, a corresponding SW, and a corresponding transmit port; and
the M PDs are configured to receive optical signals from corresponding optical fibers through the AWG and corresponding receive ports.

7. The BBU according to claim 1 or 2, wherein a first receive port is coupled to an optical fiber;
the M lasers are configured to send optical signals to the optical fiber through corresponding SWs, the AWG, and the first receive port; and
the M PDs are configured to receive optical signals from the optical fiber through the AWG and the first receive port.

8. The BBU according to claim 3, wherein a first receive port is coupled to an optical fiber;
the M lasers are configured to send optical signals to the optical fiber through corresponding MODs, corresponding SWs, the AWG, and the first receive port; and
the M PDs are configured to receive optical signals from the optical fiber through the AWG and the first receive port.

9. The BBU according to claim 2, wherein the j^{th} transmit port and a first receive port each are coupled to an optical fiber;
a j^{th} laser is configured to send an optical signal to a corresponding optical fiber through a corresponding SW, a corresponding MUX, and a corresponding transmit port;
an M* laser is configured to send an optical signal to a corresponding optical fiber through a corresponding SW, the AWG, and the first receive port;
a j^{th} PD is configured to receive an optical signal from the corresponding optical fiber through the AWG, the MUX, and the j^{th} transmit port; and
an M* PD is configured to receive an optical signal from the corresponding optical fiber through the AWG and the first receive port.

10. The BBU according to claim 3, wherein the j^{th} transmit port and a first receive port each are coupled to an optical fiber;
a j^{th} laser is configured to send an optical signal to a corresponding optical fiber through a corresponding MOD, a corresponding SW, a corresponding MUX, and a corresponding transmit port;
an M* laser is configured to send an optical signal to a corresponding optical fiber through a corresponding MOD, a corresponding SW, the AWG, and the first receive port;
a j^{th} PD is configured to receive an optical signal from the corresponding optical fiber through the AWG, the MUX, and the j^{th} transmit port; and
an M* PD is configured to receive an optical signal from the corresponding optical fiber through the AWG and the first receive port.

11. The BBU according to claim 1, 2, 4, 5, 7, or 9, wherein the laser is a directly modulated laser DML.

12. The BBU according to any one of claims 1 to 11, wherein the laser is a semiconductor laser.

13. An access network device, comprising an active antenna unit AAU and the BBU according to any one of claims 1 to 12.
